# EUROPEAN PATENT APPLICATION

(11) **EP 4 510 432 A1**
(43) Date of publication of application: **19.02.2025**
(21) Application number: 22732280.7
(22) Date of filing: 13.04.2022
(51) Int. Cl.: H02K 21/44

(54) **FLUX-SWITCHING PERMANENT MAGNET MACHINE**

(71) Applicant: Mondragon Goi Eskola Politeknikoa Jose Maria Arizmendiarrieta, S.COOP., 20500 Arrasate-Mondragon (Gipuzkoa) (ES)
(72) Inventor: EGUREN ALUSTIZA, Imanol, 20400 Tolosa (ES); ALMANDOZ LARRALDE, Gaizka, 48004 Bilbao (ES); EGEA CACERES, Aritz Imanol Alejandro, 20709 Ezkio (ES); POZA LOBO, Francisco Javier, 20570 Bergara (ES)
(74) Representative: Igartua, Ismael
(86) International application number: PCT/ES2022/070232
(87) International publication number: WO 2023/198941

(57) **Abstract**

Flux-switching permanent magnet machine (1) comprising an active element (2) and a passive element (3) which are movable relative to each other in a direction of relative movement. The passive element (3) comprises a plurality of teeth (40). The active element (2) comprises a plurality of U-shaped modules (20) comprising a base (22) and two legs (21) defining a housing (30).The consecutive modules (20) are separated by primary permanent magnets (10), each primary permanent magnet (10) forming a tooth (23) with the adjacent leg (21) of each adjacent module (20). The active element (2) comprises a winding (24) wound around at least one of every two consecutive teeth (23), said winding (24) being partially housed in housings (30) contiguous to the respective tooth (23). The active element (2) comprises at least one secondary permanent magnet (11) arranged in each housing (30).

## Description

### TECHNICAL FIELD

The present invention relates to flux-switching permanent magnet machines.

### PRIOR ART

Flux-switching permanent magnet machines are known in the state of the art. Flux-switching permanent magnet machines, known as FSPM, comprise an active element and a passive element, such that the active element and the passive element are movable relative to each other in a direction of relative movement. Furthermore, they can have a linear configuration, such as in the so-called LFSPM (Linear Flux-Switching Permanent Magnet Machines), or a rotary configuration. The passive element comprises a plurality of teeth projecting towards the active element. The active element comprises a plurality of U-shaped modules comprising a base and two legs projecting towards the passive element, said base and said legs defining a housing. The consecutive modules are separated by primary permanent magnets, each primary permanent magnet forming a tooth with the adjacent leg of each adjacent module. The active element comprises a winding around the teeth, such that, depending on the type of flux-switching permanent magnet machine, a winding can be arranged around each tooth, or in another type of flux-switching permanent magnet machine, a winding may be arranged around at least one of every two consecutive teeth. Therefore, each winding is partially housed in the housings contiguous to the respective tooth, around which said winding is arranged. The consecutive primary permanent magnets arranged in the active element are magnetized with opposite orientations in the direction of relative movement. Thus, in a flux-switching permanent magnet machine with a linear configuration, one primary permanent magnet is magnetized in the direction of relative linear movement between the passive element and the active element, and the next primary permanent magnet is magnetized in the opposite direction to said direction of relative linear movement between the passive element and the active element. In a rotary configuration in which the passive element rotates with respect to the active element, the primary permanent magnets are magnetized with a tangential orientation, such that one primary permanent magnet is magnetized tangentially in the direction of rotation of the passive element, which is a rotor in the case of a rotary configuration, and the next primary permanent magnet is magnetized tangentially in the opposite direction to the direction of rotation of said rotor.

FR3011142A1 describes a stator of a flux-switching permanent magnet machine comprising an annular arrangement of U-shaped modules separated by primary permanent magnets. Each U-shaped module comprises two legs, each of said legs being adjacent to a primary permanent magnet, such that each primary permanent magnet, together with the adjacent leg of each adjacent module forms a tooth extending towards the inner circumference of the stator. The teeth are separated by primary housings formed by the inner space of each module. The stator further comprises secondary teeth capable of defining secondary housings in which secondary permanent magnets are arranged.

### DISCLOSURE OF THE INVENTION

The object of the invention is to provide a flux-switching permanent magnet machine, as defined in the claims.

The flux-switching permanent magnet machine of the invention comprises an active element and a passive element, the active element and the passive element being movable relative to each other in a direction of relative movement. The passive element comprises a plurality of teeth projecting towards the active element. The active element comprises a plurality of U-shaped modules, and each of said modules comprises a base and two legs projecting towards the passive element, said base and said legs defining a housing. The consecutive modules are separated by primary permanent magnets, each primary permanent magnet forming a tooth with the adjacent leg of each adjacent module. The active element comprises a winding around at least one of every two consecutive teeth, said winding being partially housed in the housings contiguous to the respective tooth, and the consecutive primary permanent magnets being magnetized with opposite orientations in the direction of relative movement. The active element comprises at least one secondary permanent magnet arranged in each housing.

Flux-switching permanent magnet machines or FSPMs have proven to have many advantages with respect to conventional permanent-magnet synchronous motors, known as PMSMs. However, flux-switching permanent magnet machines also have certain disadvantages given that these machines experience greater copper losses for one and the same power capacity as a conventional permanent-magnet synchronous motor or PMSM, causing them to have a lower performance, with said machines also having a low power factor and a high current consumption. The present invention seeks to provide a solution to these problems of the flux-switching permanent magnet machines by means of providing at least one secondary permanent magnet in each of the housings formed between the base and the two legs of each of the U-shaped modules of the active element. By means of the incorporation of said at least one secondary permanent magnet, the magnetic flux generated in the flux-switching permanent magnet machine is reinforced and leakages of said magnetic flux are minimized, thereby improving the force density (in the case of a linear machine) or the torque density (in the case of a rotary machine) and the power factor of the flux-switching permanent magnet machine, obtaining at the same time a compact machine with improved performance and reduced consumption.

These and other advantages and features of the invention will become apparent in view of the figures and detailed description of the invention.

### DESCRIPTION OF THE DRAWINGS

Figure 1 shows a schematic depiction of a first embodiment of a flux-switching permanent magnet machine according to the invention.
Figure 2 shows a schematic depiction of a second embodiment of a flux-switching permanent magnet machine according to the invention.
Figure 3 shows a schematic depiction of a third embodiment of a flux-switching permanent magnet machine according to the invention.
Figure 4 shows a schematic depiction of a fourth embodiment of a flux-switching permanent magnet machine according to the invention.
Figure 5 shows a schematic depiction of a fifth embodiment of a flux-switching permanent magnet machine according to the invention.
Figure 6 shows a schematic depiction of a sixth embodiment of a flux-switching permanent magnet machine according to the invention.
Figure 7 shows a schematic depiction of a seventh embodiment of a flux-switching permanent magnet machine according to the invention.
Figure 8 shows a partially exploded partial view of an embodiment of a flux-switching permanent magnet machine according to the invention.

### DETAILED DISCLOSURE OF THE INVENTION

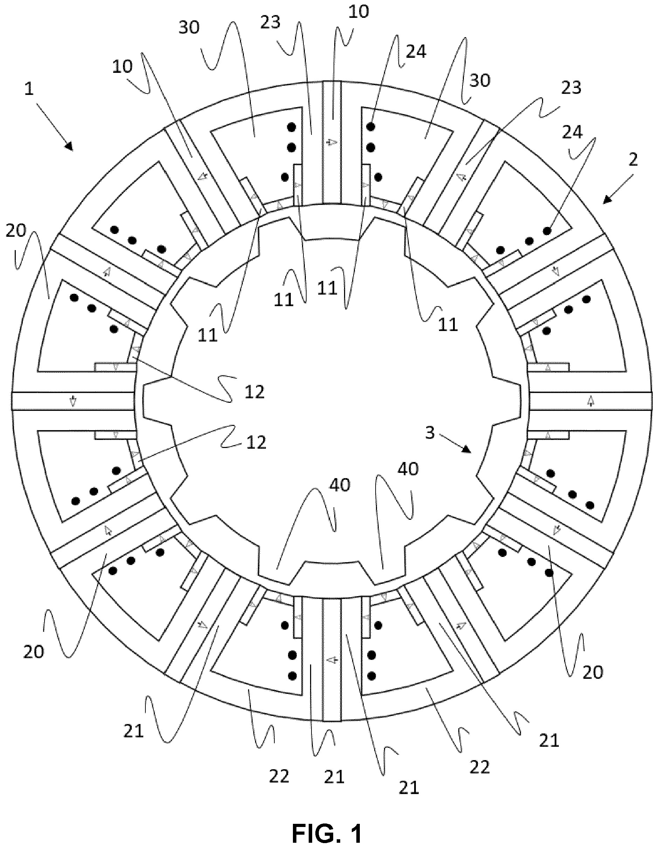

Figures 1 to 7 show first, second, third, fourth, fifth, sixth, and seventh embodiments of a flux-switching permanent magnet machine according to the invention.

In one embodiment, the flux-switching permanent magnet machine 1 of the invention comprises an active element 2 and a passive element 3, the active element 2 and the passive element 3 being movable relative to each other in a direction of relative movement. The passive element 3 comprises a plurality of teeth 40 projecting towards the active element 2. The active element 2 comprises a plurality of U-shaped modules 20, and each of said modules 20 comprises a base 22 and two legs 21 projecting towards the passive element 3, said base 22 and said legs 21 defining a housing 30. The consecutive modules 20 are separated by primary permanent magnets 10, each primary permanent magnet 10 forming a tooth 23 with the adjacent leg 21 of each adjacent module 20. The active element 2 comprises a winding 24 around at least one of every two consecutive teeth 23, said winding 24 being partially housed in the housings 30 contiguous to the respective tooth 23, and the consecutive primary permanent magnets 10 being magnetized with opposite orientations in the direction of relative movement. The active element 2 comprises at least one secondary permanent magnet 11, 12 arranged in each housing 30.

In the flux-switching permanent magnet machine 1 of the invention, the housing 30, which is configured for partially housing one or two windings 24, depending on the flux-switching permanent magnet machine 1 at hand, is used for housing therein at least one secondary permanent magnet 11, 12 whereby the magnetic flux generated by the flux-switching permanent magnet machine 1 is modified. By means of said modification of the magnetic flux, leakages of said magnetic flux can be minimized, thereby improving the force density (in the case of a linear machine) or the torque density (in the case of a rotary machine) and the power factor of the flux-switching permanent magnet machine, obtaining at the same time a compact machine with improved performance and reduced consumption.

In one embodiment of the flux-switching machine 1 of the invention, the active element 2 comprises a winding 24 around each tooth 23.

In one embodiment of the flux-switching machine 1 of the invention, each tooth 23 has a constant cross-section. Having a constant cross-section means that the legs 21 of each module 20 have the same contour along their entire length. This means that teeth such as those used in conventional flux-switching machines can be used in practice.

In one embodiment of the flux-switching machine 1 of the invention, two secondary permanent magnets 11 are arranged longitudinally in each housing 30 with respect to the teeth 23, the first secondary permanent magnet 11 being fixed to one leg 21 of the module 20 and the second secondary permanent magnet 11 being fixed to the other leg of the module 20, the two secondary permanent magnets 11 being magnetized with opposite orientations in the direction of relative movement. In one embodiment, the secondary permanent magnets 11 are fixed to the respective legs 21 by means of glue.

In one embodiment of the flux-switching machine 1 of the invention, if the ratio between the number of teeth 40 in the passive element 3 with respect to the number of primary permanent magnets 10 in the active element 2 is greater than or equal to 1.5, if the primary permanent magnet 10 located next to each leg 21 of the module 20 injects flux into the housing 30, the secondary permanent magnet 11 located next to said leg 21 extracts flux from said housing 30, and if the primary permanent magnet 10 located next to each leg 21 of the module 20 extracts flux from the housing 30, the secondary permanent magnet 11 located next to said leg 21 injects flux into said housing 30.

However, in another embodiment of the flux-switching machine 1 of the invention, if the ratio between the number of teeth 40 in the passive element 3 with respect to the number of primary permanent magnets 10 in the active element 2 is less than 1.5, if the primary permanent magnet 10 located next to each leg 21 of the module 20 injects flux into the housing 30, the secondary permanent magnet 11 located next to said leg 21 injects flux into said housing 30, and if the primary permanent magnet 10 located next to each leg 21 of the module 20 extracts flux from the housing 30, the secondary permanent magnet 11 located next to said leg 21 extracts flux from said housing 30.

In one embodiment of the flux-switching machine 1 of the invention, each secondary permanent magnet 11 extends along the entire length of the leg 21 next to which it is arranged.

In one embodiment of the flux-switching machine 1 of the invention, the winding 24 is arranged around the tooth 23 and the secondary permanent magnets 11 located on either side of said tooth 23.

In one embodiment of the flux-switching machine 1 of the invention, the active element 2 comprises a secondary permanent magnet 12 arranged transversely with respect to the teeth 23 in each housing 30, said secondary permanent magnet 12 being fitted in said housing 30, and said secondary permanent magnet 12 being magnetized with an orientation perpendicular to the direction of relative movement. In one embodiment, in addition to being fitted, the secondary permanent magnet 12 is fixed by means of glue.

In one embodiment of the flux-switching machine 1 of the invention, if the ratio between the number of teeth 40 in the passive element 3 with respect to the number of primary permanent magnets 10 in the active element 2 is greater than or equal to 1.5, if the primary permanent magnets 10 located in the teeth 23 contiguous to the housing 30 in which said secondary permanent magnet 12 is located extract flux from said housing 30, said secondary permanent magnet 12 extracts flux from said housing 30, and if the primary permanent magnets 10 located in the teeth 23 contiguous to the housing 30 in which said secondary permanent magnet 12 is located inject flux into said housing 30, said secondary permanent magnet 12 injects flux into said housing 30.

However, in another embodiment of the flux-switching machine 1 of the invention, if the ratio between the number of teeth 40 in the passive element 3 with respect to the number of primary permanent magnets 10 in the active element 2 is less than 1.5, if the primary permanent magnets 10 located in the teeth 23 contiguous to the housing 30 in which said secondary permanent magnet 12 is located extract flux from said housing 30, said secondary permanent magnet 12 injects flux into said housing 30, and if the primary permanent magnets 10 located in the teeth 23 contiguous to the housing 30 in which said secondary permanent magnet 12 is located inject flux into said housing 30, said secondary permanent magnet 12 extracts flux from said housing 30.

In one embodiment of the flux-switching machine 1 of the invention, the transversely arranged secondary permanent magnets 12 are located at one end of the housing 30 away from the base 22. However, in another embodiment of the flux-switching machine 1 of the invention, the transversely arranged secondary permanent magnets 12 are supported on the base 22.

In one embodiment of the flux-switching machine 1 of the invention, the active element 2 comprises at least one additional secondary permanent magnet 13 in each housing 30 arranged between contiguous secondary permanent magnets 11, 12, said additional permanent magnets 13 being magnetized with an intermediate orientation between the magnetization orientations of the secondary permanent magnets 11, 12 between which they are arranged.

In one embodiment of the flux-switching machine 1 of the invention, the active element 2 comprises an array of additional secondary permanent magnets 13 in each housing 30 arranged between contiguous secondary permanent magnets 11, 12, said additional permanent magnets 13 being magnetized with intermediate orientations between the magnetization orientations of the secondary permanent magnets 11, 12 and/or the magnetization orientations of the additional permanent magnets 13 between which they are arranged.

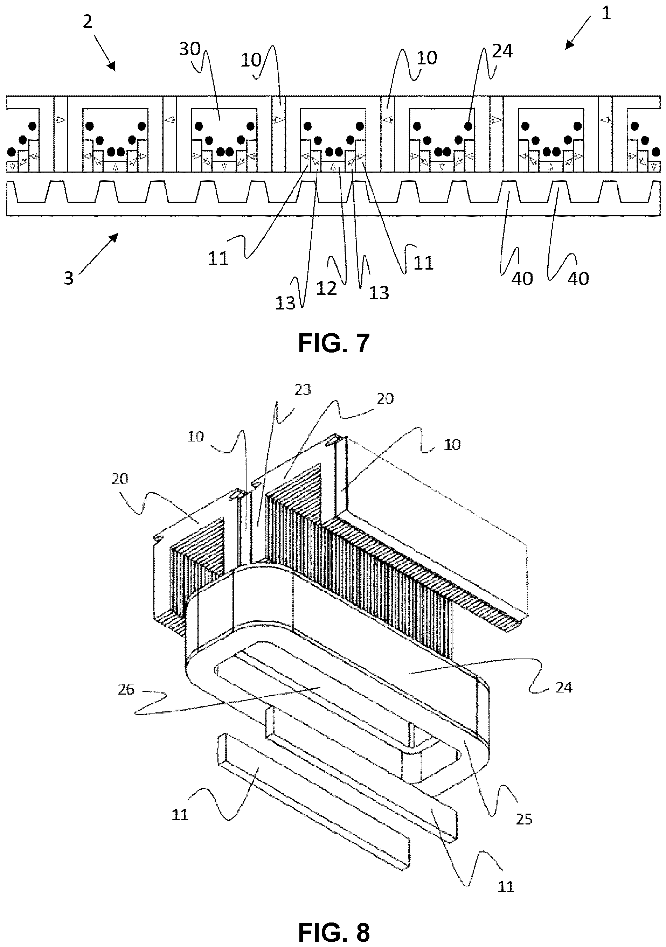

In one embodiment of the flux-switching machine 1 of the invention, the winding 24 is mounted on a support 25 comprising a hole 26, the tooth 23 being arranged in the hole 26 of a respective support 25. Figure 8 shows a partial view of a flux-switching machine 1 according to the invention, in which the support 25 on which the winding 24 is mounted is shown. The hole 26 of the support 25 of this embodiment is configured so that the tooth 23 and the secondary permanent magnets 11 located on either side of said tooth 23 are arranged inside said hole 26.

In one embodiment of the flux-switching machine 1 of the invention, the active element 2 comprises a peripheral reinforcement magnet 14 fixed between every two primary permanent magnets 10 and supported on the base 22 of the module 20, the peripheral reinforcement magnet 14 being magnetized with an orientation perpendicular to the direction of relative movement, such that if the primary permanent magnets 10 between which the peripheral reinforcement magnet 14 is located extract flux from the housing 30, the peripheral reinforcement magnet 14 extracts flux from said housing 30, and if the primary permanent magnets 10 between which the peripheral reinforcement magnet 14 is located inject flux into the housing 30, the peripheral reinforcement magnet 14 injects flux into said housing 30.

In one embodiment, the flux-switching permanent magnet machine 1 is a linear machine. However, in another embodiment, the flux-switching permanent magnet machine 1 is a rotary machine, with the active element 2 being a stator and the passive element 3 being a rotor.

Several embodiments of the flux-switching permanent magnet machine 1 of the invention are described below. Said embodiments are not intended to be limiting examples of the invention, but rather illustrative examples thereof, whereby it is possible to illustrate some of the different configurations in which the secondary permanent magnets 11, the secondary permanent magnets 12, the additional secondary permanent magnets 13, and the peripheral reinforcement magnets 14 can be combined for modifying the magnetic flux generated in the flux-switching permanent magnet machine 1 as may be of interest in each case, and the way in which said configurations can be applied in both linear machines and rotary machines, and in the different types of said machines, such as C-Core, E-Core, U-Core, Multi-tooth machines, etc. In one embodiment, the flux-switching permanent magnet machine 1 of the invention is a rotary machine in which the rotor is arranged on the outside of the stator.

Figure 1 shows a first embodiment of a flux-switching permanent magnet machine 1 according to the invention, comprising an active element 2 and a passive element 3, the active element 2 and the passive element 3 being movable relative to each other in a direction of relative movement. The flux-switching permanent magnet machine 1 of the first embodiment is a rotary machine, with the active element 2 being a stator and the passive element 3 being a rotor. In operation, the rotor rotates inside the stator, which remains stationary. The rotor comprises a plurality of teeth 40 projecting towards the stator. The stator comprises a plurality of U-shaped modules 20, and each of said modules 20 comprises a base 22 and two legs 21 projecting towards the rotor, said base 22 and said legs 21 defining a housing 30. Therefore, the housing 30 is the space demarcated by the base 22 and the two legs 21 of each module 20. The consecutive modules 20 are separated by primary permanent magnets 10, each primary permanent magnet 10 forming a tooth 23 with the adjacent leg 21 of each adjacent module 20.

In said first embodiment, the active element 2 comprises a winding 24 around one of every two consecutive teeth 23. Said winding 24 is partially housed both in the housing 30 located on the left side of the tooth 23 around which the winding 24 is arranged, and in the housing 30 located on the right side thereof. Therefore, a winding 24 is only partially housed in each housing 30. The windings 24 are schematically depicted in a section view in the figures by means of a plurality of dots. Furthermore, as shown in Figure 1 in which the arrows depicted on each of the permanent magnets represent its magnetization orientation, said consecutive primary permanent magnets 10 are magnetized with opposite orientations in the direction of relative movement, i.e., magnetized tangentially with respect to the direction of rotation of the rotor relative to the stator such that if a primary permanent magnet 10 is magnetized tangentially in one direction, the next primary permanent magnet 10 in the stator is magnetized tangentially in the opposite direction, and so on so forth. The stator of this first embodiment comprises two secondary permanent magnets 11 arranged in each housing 30.

In the first embodiment of the flux-switching permanent magnet machine 1, each tooth 23 has a constant cross-section. Having a constant cross-section means that the legs 21 of each module 20 have the same contour along their entire length. This means that teeth such as those used in conventional flux-switching machines can be used in practice.

In the first embodiment shown in Figure 1, the two secondary permanent magnets 11 in each housing 30 are arranged longitudinally with respect to the teeth 23, the first secondary permanent magnet 11 being fixed to one leg 21 of the module 20 and the second secondary permanent magnet 11 being fixed to the other leg of the module 20, the two secondary permanent magnets 11 being magnetized with opposite orientations in the direction of relative movement. In the context of the invention, the secondary permanent magnets 11 being arranged longitudinally with respect to the teeth 23 means that each secondary permanent magnet 11 is arranged parallel and contiguous to the respective leg 21.

In the first embodiment shown in Figure 1, the rotor comprises ten teeth 40, and the stator comprises twelve primary permanent magnets 10, the ratio between the number of teeth 40 in the rotor with respect to the number of primary permanent magnets 10 in the stator being less than 1.5. In said first embodiment, the magnetization orientation of the secondary permanent magnets 11 is such that if the primary permanent magnet 10 located next to each leg 21 of the module 20 injects flux into the housing 30, the secondary permanent magnet 11 located next to said leg 21 injects flux into said housing 30, and if the primary permanent magnet 10 located next to each leg 21 of the module 20 extracts flux from the housing 30, the secondary permanent magnet 11 located next to said leg 21 extracts flux from said housing 30.

In the first embodiment of the flux-switching permanent magnet machine 1, the secondary permanent magnets 11 do not extend along the entire length of the leg 21 next to which they are arranged, but rather are arranged contiguous to the inner contour of the stator and extend towards the inner contour of the base 22 of the module 20 along a distance less than the length of the legs 21. However, in another embodiment, the secondary permanent magnets 11 extend along the entire length of the leg 21 next to which they are arranged.

In the first embodiment of the flux-switching permanent magnet machine 1, the winding 24 is arranged around the tooth 23 and the secondary permanent magnets 11 located on either side of said tooth 23; therefore, the winding 24 will be arranged around the tooth 23 both in the area of the tooth 23 close to the inner contour of the base 22 in which no secondary permanent magnet 11 is arranged and in the area of the tooth 23 close to the inner contour of the stator in which a secondary permanent magnet 11 is arranged.

In the first embodiment of the flux-switching permanent magnet machine 1, the active element 2 comprises a secondary permanent magnet 12 arranged transversely with respect to the teeth 23 in each housing 30, said secondary permanent magnet 12 being fitted in said housing 30, and said secondary permanent magnet 12 being magnetized with an orientation perpendicular to the direction of relative movement. Given that in the first embodiment the flux-switching permanent magnet machine 1 is a rotary machine, said secondary permanent magnet is magnetized in the radial direction of the rotary machine. In the context of the invention, the secondary permanent magnets 12 being arranged transversely with respect to the teeth 23 means that each secondary permanent magnet 12 is arranged perpendicular with respect to an imaginary plane which divides the housing 30 into two equal parts, such that the legs 21 located on both sides of said plane are symmetrical with one another with respect to said plane. Given that in this first embodiment the flux-switching permanent magnet machine 1 comprises in each housing 30 two secondary permanent magnets 11, each of them being located next to the respective leg 21, the secondary permanent magnet 12 is arranged fitted between said two secondary permanent magnets 11.

In the first embodiment of the flux-switching permanent magnet machine 1, the ratio between the number of teeth 40 in the rotor with respect to the number of primary permanent magnets 10 in the stator is less than 1.5. In said first embodiment, the magnetization orientation of the secondary permanent magnets 12 is such that if the primary permanent magnets 10 located in the teeth 23 contiguous to the housing 30 in which said secondary permanent magnet 12 is located extract flux from said housing 30, said secondary permanent magnet 12 injects flux into said housing 30, and if the primary permanent magnets 10 located in the teeth 23 contiguous to the housing 30 in which said secondary permanent magnet 12 is located inject flux into said housing 30, said secondary permanent magnet 12 extracts flux from said housing 30.

In the first embodiment of the flux-switching permanent magnet machine 1, the transversely arranged secondary permanent magnets 12 are located at one end of the housing 30 away from the base 22. However, in another embodiment of the flux-switching permanent magnet machine 1, the transversely arranged secondary permanent magnets 12 are supported on the base 22.

In the first embodiment of the flux-switching permanent magnet machine 1, the winding 24 is mounted on a support 25, not shown in Figure 1, comprising a hole 26, with the tooth 23 being arranged in the hole 26 of a respective support 25. The use of the support 25 allows a simpler installation of the windings 24 in the flux-switching permanent magnet machine 1.

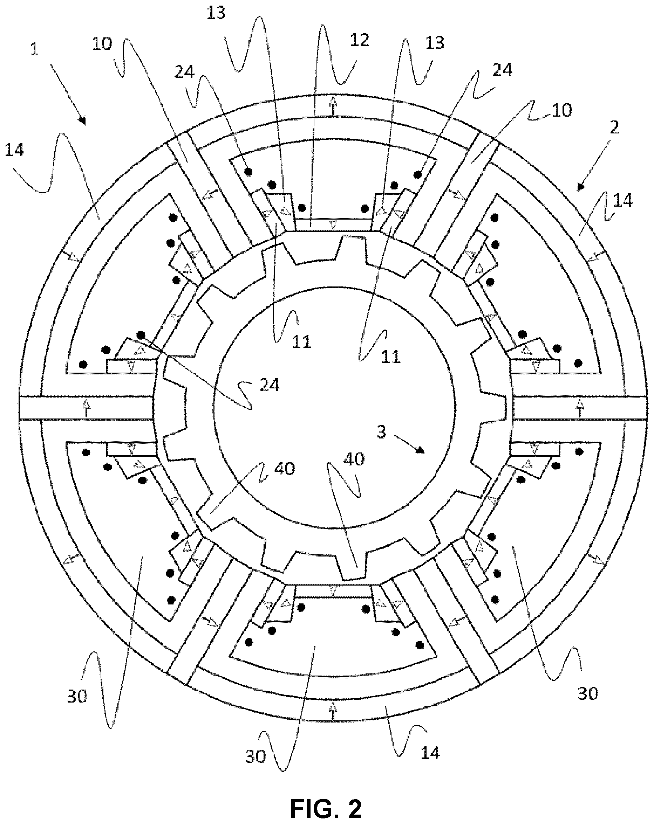

Figure 2 shows a second embodiment of a flux-switching permanent magnet machine 1 according to the invention, comprising an active element 2 and a passive element 3, the active element 2 and the passive element 3 being movable relative to each other in a direction of relative movement. Like in the first embodiment, the flux-switching permanent magnet machine 1 of the second embodiment is a rotary machine, with the active element 2 being a stator and the passive element 3 being a rotor. The rotor comprises a plurality of teeth 40 projecting towards the stator. Like in the first embodiment, the stator comprises a plurality of U-shaped modules 20, and each of said modules 20 comprises a base 22 and two legs 21 projecting towards the rotor, said base 22 and said legs 21 defining a housing 30. The consecutive modules 20 are separated by primary permanent magnets 10, each primary permanent magnet 10 forming a tooth 23 with the adjacent leg 21 of each adjacent module 20. Like in the first embodiment, the consecutive primary permanent magnets 10 are magnetized with opposite orientations in the direction of relative movement. In said second embodiment, the active element 2 comprises a winding 24 around each tooth 23, said winding 24 being housed partially in the housings 30 contiguous to the respective tooth 23. The stator of this second embodiment comprises two secondary permanent magnets 11 arranged in each housing 30.

Like in the first embodiment, in the second embodiment of the flux-switching permanent magnet machine 1, each tooth 23 has a constant cross-section.

In the second embodiment shown in Figure 2, the two secondary permanent magnets 11 of each housing 30 are arranged longitudinally with respect to the teeth 23, the first secondary permanent magnet 11 being fixed to one leg 21 of the module 20 and the second secondary permanent magnet 11 being fixed to the other leg of the module 20, the two secondary permanent magnets 11 being magnetized with opposite orientations in the direction of relative movement.

In the second embodiment shown in Figure 2, the rotor comprises thirteen teeth 40 and the stator comprises six primary permanent magnets 10, the ratio between the number of teeth 40 in the rotor with respect to the number of primary permanent magnets 10 in the stator being greater than 1.5. In said second embodiment, the magnetization orientation of the secondary permanent magnets 11 is such that if the primary permanent magnet 10 located next to each leg 21 of the module 20 injects flux into the housing 30, the secondary permanent magnet 11 located next to said leg 21 extracts flux from said housing 30, and if the primary permanent magnet 10 located next to each leg 21 of the module 20 extracts flux from the housing 30, the secondary permanent magnet 11 located next to said leg 21 injects flux into said housing 30.

In the second embodiment of the flux-switching permanent magnet machine 1, the secondary permanent magnets 11 do not extend along the entire length of the leg 21 next to which they are arranged, but rather are arranged contiguous to the inner contour of the stator and extend towards the inner contour of the base 22 of the module 20 along a distance less than the length of the legs 21. However, in another embodiment, the secondary permanent magnets 11 extend along the entire length of the leg 21 next to which they are arranged.

In the second embodiment of the flux-switching permanent magnet machine 1, the winding 24 is arranged around the tooth 23 and the secondary permanent magnets 11 located on either side of said tooth 23; therefore, the winding 24 will be arranged around the tooth 23 both in the area of the tooth 23 close to the inner contour of the base 22 in which no secondary permanent magnet 11 is arranged and in the area of the tooth 23 close to the inner contour of the stator in which a secondary permanent magnet 11 is arranged.

Like in the first embodiment, in the second embodiment of the flux-switching permanent magnet machine 1, the active element 2 also comprises a secondary permanent magnet 12 arranged transversely with respect to the teeth 23 in each housing 30, said secondary permanent magnet 12 being fitted in said housing 30, and said secondary permanent magnet 12 being magnetized with an orientation perpendicular to the direction of relative movement.

In the second embodiment of the flux-switching permanent magnet machine 1, the ratio between the number of teeth 40 in the rotor with respect to the number of primary permanent magnets 10 in the stator is greater than 1.5. In said second embodiment, the magnetization orientation of the secondary permanent magnets 12 is such that if the primary permanent magnets 10 located in the teeth 23 contiguous to the housing 30 in which said secondary permanent magnet 12 is located extract flux from said housing 30, said secondary permanent magnet 12 extracts flux from said housing 30, and if the primary permanent magnets 10 located in the teeth 23 contiguous to the housing 30 in which said secondary permanent magnet 12 is located inject flux into said housing 30, said secondary permanent magnet 12 injects flux into said housing 30.

In the second embodiment of the flux-switching permanent magnet machine 1, the transversely arranged secondary permanent magnets 12 are located at one end of the housing 30 away from the base 22. However, in another embodiment of the flux-switching permanent magnet machine 1, the transversely arranged secondary permanent magnets 12 are supported on the base 22.

In the second embodiment of the flux-switching permanent magnet machine 1, the active element 2 comprises two additional secondary permanent magnets 13 in each housing 30, each of said additional secondary permanent magnets 13 being arranged between a secondary permanent magnet 11 and a secondary permanent magnet 12, the secondary permanent magnet 11 and the secondary permanent magnet 12 being contiguous, said additional permanent magnets 13 being magnetized with an intermediate orientation between the magnetization orientations of the secondary permanent magnets 11, 12 between which they are arranged. In the second embodiment shown in Figure 2, when the secondary permanent magnet 12 located in a housing 30 is magnetized with a magnetization orientation of 90°, the secondary permanent magnet 11 located on the right side thereof in the same housing 30 is magnetized with a magnetization orientation of 0°, and the additional secondary permanent magnet 13 between both therefore has an intermediate magnetization orientation that is between 0° and 90° which, in Figure 2, is about 45°. The secondary permanent magnet 11 located in the same housing 30 and on the left side of said secondary permanent magnet 12 is magnetized with a magnetization orientation of 180°, such that the additional secondary permanent magnet 13 located between said secondary permanent magnet 11 and said secondary permanent magnet 12 has an intermediate magnetization orientation that is between 90° and 180° which, in Figure 2, is about 135°.

Although there is only one additional secondary permanent magnet 13 between the secondary permanent magnet 11 and the secondary permanent magnet 12 in the second embodiment of the flux-switching permanent magnet machine 1, in another embodiment, the active element 2 comprises an array of additional secondary permanent magnets 13 in each housing 30 arranged between contiguous secondary permanent magnets 11, 12, said additional permanent magnets 13 being magnetized with intermediate orientations between the magnetization orientations of the secondary permanent magnets 11, 12 and/or the magnetization orientations of the additional permanent magnets 13 between which they are arranged. Therefore, in the case where the active element 2, instead of comprising two additional secondary permanent magnets 13 like in the second embodiment, comprises two arrays of additional secondary permanent magnets 13, each array comprising, for example, three additional secondary permanent magnets 13, and each array being arranged between the secondary permanent magnet 12 and the corresponding secondary permanent magnet 11, in the case of the array of additional secondary permanent magnets 13 located on the right side of the secondary permanent magnet 12, the additional secondary permanent magnet 13 on the left side will have an intermediate magnetization orientation that is between the magnetization orientation of the secondary permanent magnet 12 and that of the central additional secondary permanent magnet 13, the central additional secondary permanent magnet 13 will have an intermediate magnetization orientation that is between the magnetization orientation of the additional secondary permanent magnet 13 on the left side and on that of the right side, and the additional secondary permanent magnet 13 on the right side will have an intermediate magnetization orientation that is between the magnetization orientation of the central additional secondary permanent magnet 13 and that of the secondary permanent magnet 11.

In the second embodiment of the flux-switching permanent magnet machine 1, the winding 24 is mounted on a support 25, not shown in Figure 2, comprising a hole 26, with the tooth 23 being arranged in the hole 26 of a respective support 25.

In the second embodiment of the flux-switching permanent magnet machine 1, the active element 2 comprises a peripheral reinforcement magnet 14 fixed between every two primary permanent magnets 10 and supported on the base 22 of the module 20, the peripheral reinforcement magnet 14 being magnetized with an orientation perpendicular to the direction of relative movement, such that if the primary permanent magnets 10 between which the peripheral reinforcement magnet 14 is located extract flux from the housing 30, the peripheral reinforcement magnet 14 extracts flux from said housing 30, and if the primary permanent magnets 10 between which the peripheral reinforcement magnet 14 is located inject flux into the housing 30, the peripheral reinforcement magnet 14 injects flux into said housing 30.

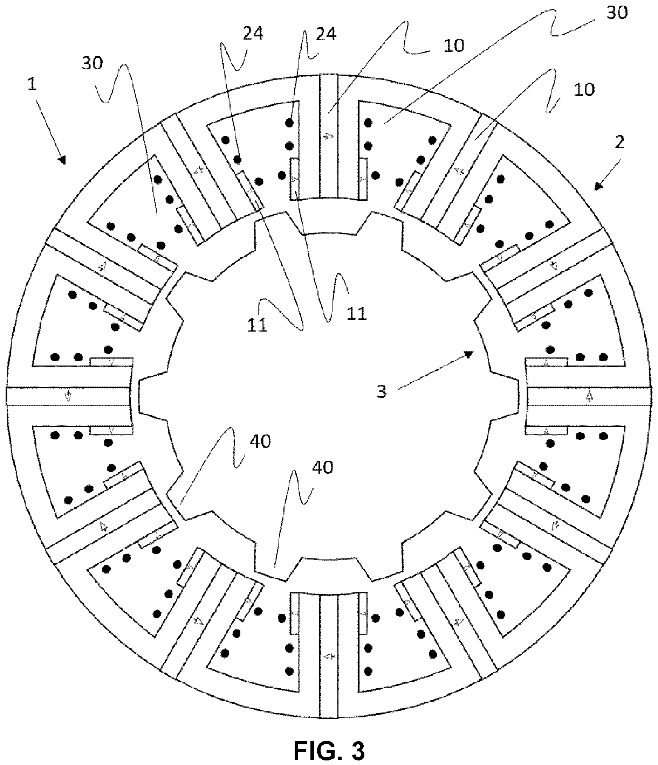

Figure 3 shows a third embodiment of a flux-switching permanent magnet machine 1 according to the invention, comprising an active element 2 and a passive element 3, the active element 2 and the passive element 3 being movable relative to each other in a direction of relative movement. Like in the first and second embodiments, the flux-switching permanent magnet machine 1 of the third embodiment is a rotary machine, the active element 2 being a stator and the passive element 3 being a rotor. The rotor comprises a plurality of teeth 40 projecting towards the stator. The stator comprises a plurality of U-shaped modules 20, and each of said modules 20 comprises a base 22 and two legs 21 projecting towards the rotor, said base 22 and said legs 21 defining a housing 30. The consecutive modules 20 are separated by primary permanent magnets 10, each primary permanent magnet 10 forming a tooth 23 with the adjacent leg 21 of each adjacent module 20. Like in the first and second embodiments, the consecutive primary permanent magnets 10 are magnetized with opposite orientations in the direction of relative movement. In said third embodiment, the active element 2 comprises a winding 24 around each tooth 23, said winding 24 being partially housed in the housings 30 contiguous to the respective tooth 23. The stator of this third embodiment comprises two secondary permanent magnets 11 arranged in each housing 30.

Like in the preceding embodiments, in the third embodiment of the flux-switching permanent magnet machine 1, each tooth 23 has a constant cross-section.

In the third embodiment shown in Figure 3, the two secondary permanent magnets 11 of each housing 30 are arranged longitudinally with respect to the teeth 23, the first secondary permanent magnet 11 being fixed to one leg 21 of the module 20 and the second secondary permanent magnet 11 being fixed to the other leg of the module 20, the two secondary permanent magnets 11 being magnetized with opposite orientations in the direction of relative movement.

In the third embodiment shown in Figure 3, the rotor comprises ten teeth 40 and the stator comprises twelve primary permanent magnets 10, the ratio between the number of teeth 40 in the rotor with respect to the number of primary permanent magnets 10 in the stator being less than 1.5. In said third embodiment, the magnetization orientation of the secondary permanent magnets 11 is such that if the primary permanent magnet 10 located next to each leg 21 of the module 20 injects flux into the housing 30, the secondary permanent magnet 11 located next to said leg 21 injects flux into said housing 30, and if the primary permanent magnet 10 located next to each leg 21 of the module 20 extracts flux from the housing 30, the secondary permanent magnet 11 located next to said leg 21 extracts flux from said housing 30.

In the third embodiment of the flux-switching permanent magnet machine 1, the secondary permanent magnets 11 do not extend along the entire length of the leg 21 next to which they are arranged, but rather are arranged contiguous to the inner contour of the stator and extend towards the inner contour of the base 22 of the module 20 along a distance less than the length of the legs 21. However, in another embodiment, the secondary permanent magnets 11 extend along the entire length of the leg 21 next to which they are arranged.

In the third embodiment of the flux-switching permanent magnet machine 1, the winding 24 is arranged around the tooth 23 and the secondary permanent magnets 11 located on either side of said tooth 23; therefore, the winding 24 will be arranged around the tooth 23 both in the area of the tooth 23 close to the inner contour of the base 22 in which no secondary permanent magnet 11 is arranged and in the area of the tooth 23 close to the inner contour of the stator in which a secondary permanent magnet 11 is arranged.

In the third embodiment of the flux-switching permanent magnet machine 1, the winding 24 is mounted on a support 25, not shown in Figure 3, comprising a hole 26, with the tooth 23 being arranged in the hole 26 of a respective support 25.

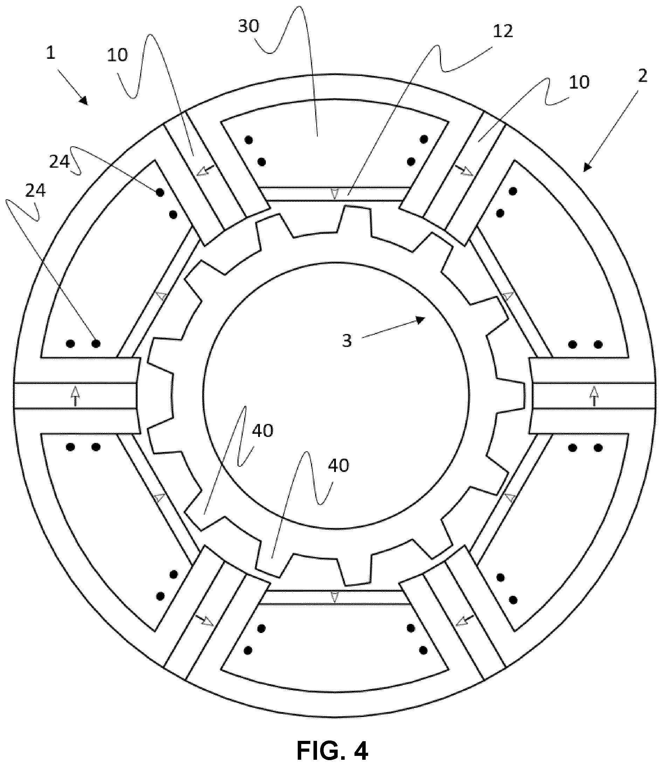

Figure 4 shows a fourth embodiment of a flux-switching permanent magnet machine 1 according to the invention, comprising an active element 2 and a passive element 3, the active element 2 and the passive element 3 being movable relative to each other in a direction of relative movement. Like in the preceding embodiments, the flux-switching permanent magnet machine 1 of the fourth embodiment is a rotary machine, with the active element 2 being a stator and the passive element 3 being a rotor. The rotor comprises a plurality of teeth 40 projecting towards the stator. Like in said embodiments, the stator of the fourth embodiment comprises a plurality of U-shaped modules 20, and each of said modules 20 comprises a base 22 and two legs 21 projecting towards the rotor, said base 22 and said legs 21 defining a housing 30. The consecutive modules 20 are separated by primary permanent magnets 10, each primary permanent magnet 10 forming a tooth 23 with the adjacent leg 21 of each adjacent module 20. Like in the preceding embodiments, the consecutive primary permanent magnets 10 are magnetized with opposite orientations in the direction of relative movement. In said fourth embodiment, the active element 2 comprises a winding 24 wound around each tooth 23. Said winding 24 is partially housed in the housings 30 contiguous to the respective tooth 23. The stator of this fourth embodiment comprises a secondary permanent magnet 12 arranged transversely with respect to the teeth 23 in each housing 30.

Like in the preceding embodiments, in the fourth embodiment of the flux-switching permanent magnet machine 1, each tooth 23 has a constant cross-section.

In the fourth embodiment of the flux-switching permanent magnet machine 1, the secondary permanent magnet 12 is fitted in the housing 30 and magnetized with an orientation perpendicular to the direction of relative movement. Given that in the fourth embodiment the flux-switching permanent magnet machine 1 is a rotary machine, said secondary permanent magnet 12 is magnetized in the radial direction of the rotary machine. As shown in Figure 4, the secondary permanent magnet 12 is fitted between the legs 21 defining the housing 30 in which said the secondary permanent magnet 12 is arranged.

In the fourth embodiment of the flux-switching permanent magnet machine 1, the rotor comprises thirteen teeth 40 and the stator comprises six primary permanent magnets 10, the ratio between the number of teeth 40 in the rotor with respect to the number of primary permanent magnets 10 in the stator being greater than 1.5. In said fourth embodiment, the magnetization orientation of the secondary permanent magnets 12 is such that if the primary permanent magnets 10 located in the teeth 23 contiguous to the housing 30 in which said secondary permanent magnet 12 is located extract flux from said housing 30, said secondary permanent magnet 12 extracts flux from said housing 30, and if the primary permanent magnets 10 located in the teeth 23 contiguous to the housing 30 in which said secondary permanent magnet 12 is located inject flux into said housing 30, said secondary permanent magnet 12 injects flux into said housing 30.

In the fourth embodiment of the flux-switching permanent magnet machine 1, the transversely arranged secondary permanent magnets 12 are located at one end of the housing 30 away from the base 22. However, in another embodiment of the flux-switching permanent magnet machine 1, the transversely arranged secondary permanent magnets 12 are supported on the base 22.

In the fourth embodiment of the flux-switching permanent magnet machine 1, the winding 24 is mounted on a support 25, not shown in Figure 4, comprising a hole 26, with the tooth 23 being arranged in the hole 26 of a respective support 25.

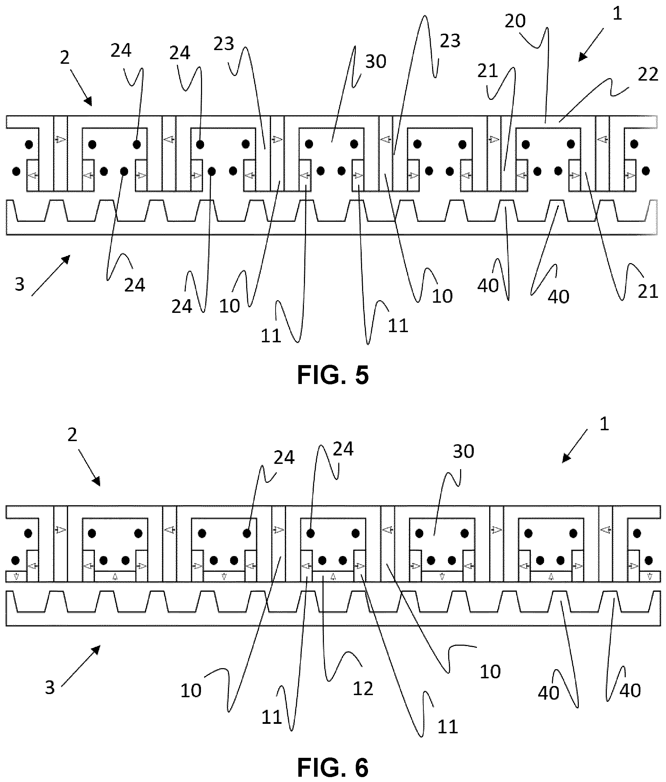

Figure 5 shows a fifth embodiment of a flux-switching permanent magnet machine 1 according to the invention, comprising an active element 2 and a passive element 3, the active element 2 and the passive element 3 being movable relative to each other in a direction of relative movement. The flux-switching permanent magnet machine 1 of the fifth embodiment is a linear machine in which a relative linear movement between the passive element 3 and the active element 2 occurs. The passive element 3 comprises a plurality of teeth 40 projecting towards the active element 2. The active element 2 comprises a plurality of U-shaped modules 20, and each of said modules 20 comprises a base 22 and two legs 21 projecting towards the passive element 3, said base 22 and said legs 21 defining a housing 30. Therefore, the housing 30 is the space demarcated by the base 22 and the two legs 21 of each module 20. The consecutive modules 20 are separated by primary permanent magnets 10, each primary permanent magnet 10 forming a tooth 23 with the adjacent leg 21 of each adjacent module 20. Furthermore, as shown in Figure 5 in which the arrows depicted on each of the permanent magnets represent its magnetization orientation, said consecutive primary permanent magnets 10 are magnetized with opposite orientations in the direction of relative movement, i.e., in the direction of relative linear movement between the passive element 3 and the active element 2, such that if a primary permanent magnet 10 is magnetized in one direction, the next primary permanent magnet 10 is magnetized in the opposite direction, and so on so forth. In said fifth embodiment, the active element 2 comprises a winding 24 wound around at least one of every two consecutive teeth 23, said winding 24 being partially housed in the housings 30 contiguous to the respective tooth 23. In particular, in the fifth embodiment, a winding 24 is wound around each tooth 23, such that both the winding 24 arranged around the tooth 23 located on the left side of said housing 30 and the winding 24 arranged around the tooth 23 located on the right side of said housing 30 are partially housed in each housing 30. The active element 2 of this fifth embodiment comprises two secondary permanent magnets 11 arranged in each housing 30.

In the fifth embodiment of the flux-switching permanent magnet machine 1, each tooth 23 has a constant cross-section. Having a constant cross-section means that the legs 21 of each module 20 have the same contour along their entire length. This means that teeth such as those used in conventional flux-switching machines can be used in practice.

In the fifth embodiment shown in Figure 5, the two secondary permanent magnets 11 of each housing 30 are arranged longitudinally with respect to the teeth 23, the first secondary permanent magnet 11 being fixed to one leg 21 of the module 20 and the second secondary permanent magnet 11 being fixed to the other leg of the module 20, the two secondary permanent magnets 11 being magnetized with opposite orientations in the direction of relative movement.

In the fifth embodiment shown in Figure 5, the ratio between the number of teeth 40 in the passive element 3 with respect to the number of primary permanent magnets 10 of the active element 2 is greater than 1.5. In said fifth embodiment, the magnetization orientation of the secondary permanent magnets 11 is such that if the primary permanent magnet 10 located next to each leg 21 of the module 20 injects flux into the housing 30, the secondary permanent magnet 11 located next to said leg 21 extracts flux from said housing 30, and if the primary permanent magnet 10 located next to each leg 21 of the module 20 extracts flux from the housing 30, the secondary permanent magnet 11 located next to said leg 21 injects flux into said housing 30.

In the fifth embodiment of the flux-switching permanent magnet machine 1, the secondary permanent magnets 11 do not extend along the entire length of the leg 21 next to which they are arranged, but rather are arranged contiguous to the contour of the active element 2 facing the passive element 3 and extend towards the inner contour of the base 22 of the module 20 along a distance less than the length of the legs 21. However, in another embodiment, the secondary permanent magnets 11 extend along the entire length of the leg 21 next to which they are arranged.

In the fifth embodiment of the flux-switching permanent magnet machine 1, the winding 24 is arranged around the tooth 23 and the secondary permanent magnets 11 located on either side of said tooth 23; therefore, the winding 24 will be arranged around the tooth 23 both in the area of the tooth 23 close to the inner contour of the base 22 in which no secondary permanent magnet 11 is arranged and in the area of the tooth 23 close to the passive element 3 in which a secondary permanent magnet 11 is arranged.

In the fifth embodiment of the flux-switching permanent magnet machine 1, the winding 24 is mounted on a support 25, not shown in Figure 5, comprising a hole 26, with the tooth 23 being arranged in the hole 26 of a respective support 25.

Figure 6 shows a sixth embodiment of the flux-switching permanent magnet machine 1 of the invention, including all the features of the fifth embodiment of the invention. Furthermore, in this sixth embodiment, the flux-switching permanent magnet machine 1 comprises a secondary permanent magnet 12 arranged transversely with respect to the teeth 23 in each housing 30, said secondary permanent magnet 12 being fitted in said housing 30, and said secondary permanent magnet 12 being magnetized with an orientation perpendicular to the direction of relative movement. Given that in this sixth embodiment the flux-switching permanent magnet machine 1 comprises in each housing 30 two secondary permanent magnets 11, each of them being located next to the respective leg 21, the secondary permanent magnet 12 is arranged fitted between said two secondary permanent magnets 11. Furthermore, given that the flux-switching permanent magnet machine 1 of the fifth embodiment is a linear machine, the secondary permanent magnet 12 is magnetized with an orientation perpendicular to the direction of relative linear movement between the passive element 3 and the active element 2.

In the sixth embodiment of the flux-switching permanent magnet machine 1 in which the ratio between the number of teeth 40 in the passive element 3 with respect to the number of primary permanent magnets 10 in the active element 2 is greater than 1.5, the magnetization orientation of the secondary permanent magnets 12 is such that if the primary permanent magnets 10 located in the teeth 23 contiguous to the housing 30 in which said secondary permanent magnet 12 is located extract flux from said housing 30, said secondary permanent magnet 12 extracts flux from said housing 30, and if the primary permanent magnets 10 located in the teeth 23 contiguous to the housing 30 in which said secondary permanent magnet 12 is located inject flux into said housing 30, said secondary permanent magnet 12 injects flux into said housing 30.

In the sixth embodiment of the flux-switching permanent magnet machine 1, the transversely arranged secondary permanent magnets 12 are located at one end of the housing 30 away from the base 22. However, in another embodiment of the flux-switching permanent magnet machine 1, the transversely arranged secondary permanent magnets 12 are supported on the base 22. In said another embodiment, if the secondary permanent magnets 11 extend along the entire length of the leg 21 next to which they are arranged, the secondary permanent magnet 12 is arranged fitted between said two secondary permanent magnets 11, and if the secondary permanent magnets 11 do not extend along the entire length of the leg 21 next to which they are arranged, the secondary permanent magnet 12 is arranged fitted between the two legs 21.

Figure 7 shows a seventh embodiment of the flux-switching permanent magnet machine 1 of the invention including all the features of the sixth embodiment. Furthermore, in this seventh embodiment, the active element 2 of the flux-switching permanent magnet machine 1 comprises two additional secondary permanent magnets 13 in each housing 30, each of said additional secondary permanent magnets 13 being arranged between a secondary permanent magnet 11 and a secondary permanent magnet 12, said secondary permanent magnets 11, 12 being contiguous. The additional permanent magnets 13 are magnetized with an intermediate orientation between the magnetization orientations of the secondary permanent magnets 11, 12 between which they are arranged. As shown in Figure 6, when the secondary permanent magnet 12 located in a housing 30 is magnetized with an orientation of 90°, the secondary permanent magnet 11 located on the right side thereof in the same housing 30 is magnetized with a magnetization orientation of 0°, and the additional secondary permanent magnet 13 is magnetized with an intermediate orientation between the magnetization orientations of the secondary permanent magnets 11, 12 between which it is arranged which, in said additional secondary permanent magnet 13 of Figure 6, is about 45°. The secondary permanent magnet 11 located in the same housing 30 and on the left side of said secondary permanent magnet 12 is magnetized with an orientation of 180°, such that the additional secondary permanent magnet 13 located between said secondary permanent magnet 11 and said secondary permanent magnet 12 is magnetized with an intermediate orientation of between 90° and 180° which, in Figure 6, is about 135°.

In another embodiment not shown in the figures, the active element 2 of the flux-switching permanent magnet machine 1 comprises an array of additional secondary permanent magnets 13 in each housing 30, said array of additional secondary permanent magnets 13 being arranged between contiguous secondary permanent magnets 11, 12. The additional permanent magnets 13 in said array are magnetized with intermediate orientations between the magnetization orientations of the secondary permanent magnets 11, 12 and/or the magnetization orientations of the additional permanent magnets 13 between which they are arranged.

Optionally, the active element 2 of the flux-switching permanent magnet machine 1 of the seventh embodiment comprises a peripheral reinforcement magnet 14 fixed between every two primary permanent magnets 10 and supported on the base 22 of the module 20, the peripheral reinforcement magnet 14 being magnetized with an orientation perpendicular to the direction of relative movement, such that if the primary permanent magnets 10 between which the peripheral reinforcement magnet 14 is located extract flux from the housing 30, the peripheral reinforcement magnet 14 extracts flux from said housing 30, and if the primary permanent magnets 10 between which the peripheral reinforcement magnet 14 is located inject flux into the housing 30, the peripheral reinforcement magnet 14 injects flux into said housing 30.

## Claims

1. Flux-switching permanent magnet machine comprising an active element (2) and a passive element (3), the active element (2) and the passive element (3) being movable relative to each other in a direction of relative movement, the passive element (3) comprising a plurality of teeth (40) projecting towards the active element (2), the active element (2) comprising a plurality of U-shaped modules (20) comprising a base (22) and two legs (21) projecting towards the passive element (3), said base (22) and said legs (21) defining a housing (30), the consecutive modules (20) being separated by primary permanent magnets (10), each primary permanent magnet (10) forming a tooth (23) with the adjacent leg (21) of each adjacent module (20), the active element (2) comprising a winding (24) around at least one of every two consecutive teeth (23), said winding (24) being partially housed in the housings (30) contiguous to the respective tooth (23), and the consecutive primary permanent magnets (10) being magnetized with opposite orientations in the direction of relative movement, **characterized in that** the active element (2) comprises at least one secondary permanent magnet (11, 12) arranged in each housing (30).

2. Flux-switching permanent magnet machine according to claim 1, wherein the active element (2) comprises a winding (24) around each tooth (23).

3. Flux-switching permanent magnet machine according to claim 1 or 2, wherein each tooth (23) has a constant cross-section.

4. Flux-switching permanent magnet machine according to any of the preceding claims, wherein two secondary permanent magnets (11) are arranged longitudinally in each housing (30) with respect to the teeth (23), the first secondary permanent magnet (11) being fixed to one leg (21) of the module (20) and the second secondary permanent magnet (11) being fixed to the other leg of the module (20), the two secondary permanent magnets (11) being magnetized with opposite orientations in the direction of relative movement.

5. Flux-switching permanent magnet machine according to claim 4, wherein if the ratio between the number of teeth (40) in the passive element (3) with respect to the number of primary permanent magnets (10) in the active element (2) is greater than or equal to 1.5, if the primary permanent magnet (10) located next to each leg (21) of the module (20) injects flux into the housing (30), the secondary permanent magnet (11) located next to said leg (21) extracts flux from said housing (30), and if the primary permanent magnet (10) located next to each leg (21) of the module (20) extracts flux from the housing (30), the secondary permanent magnet (11) located next to said leg (21) injects flux into said housing (30), and wherein if the ratio between the number of teeth (40) in the passive element (3) with respect to the number of primary permanent magnets (10) in the active element (2) is less than 1.5, if the primary permanent magnet (10) located next to each leg (21) of the module (20) injects flux into the housing (30), the secondary permanent magnet (11) located next to said leg (21) injects flux into said housing (30), and if the primary permanent magnet (10) located next to each leg (21) of the module (20) extracts flux from the housing (30), the secondary permanent magnet (11) located next to said leg (21) extracts flux from said housing (30).

6. Flux-switching permanent magnet machine according to claim 4 or 5, wherein each secondary permanent magnet (11) extends along the entire length of the leg (21) next to which it is arranged.

7. Flux-switching permanent magnet machine according to any of claims 4 to 6, wherein the winding (24) is arranged around the tooth (23) and the secondary permanent magnets (11) located on either side of said tooth (23).

8. Flux-switching permanent magnet machine according to any of the preceding claims, wherein the active element (2) comprises a secondary permanent magnet (12) arranged transversely with respect to the teeth (23) in each housing (30), said secondary permanent magnet (12) being fitted in said housing (30), and said secondary permanent magnet (12) being magnetized with an orientation perpendicular to the direction of relative movement.

9. Flux-switching permanent magnet machine according to claim 8, wherein if the ratio between the number of teeth (40) in the passive element (3) with respect to the number of primary permanent magnets (10) in the active element (2) is greater than or equal to 1.5, if the primary permanent magnets (10) located in the teeth (23) contiguous to the housing (30) in which said secondary permanent magnet (12) is located extract flux from said housing (30), said secondary permanent magnet (12) extracts flux from said housing (30), and if the primary permanent magnets (10) located in the teeth (23) contiguous to the housing (30) in which said secondary permanent magnet (12) is located inject flux into said housing (30), said secondary permanent magnet (12) injects flux into said housing (30), and wherein if the ratio between the number of teeth (40) in the passive element (3) with respect to the number of primary permanent magnets (10) in the active element (2) is less than 1.5, if the primary permanent magnets (10) located in the teeth (23) contiguous to the housing (30) in which said secondary permanent magnet (12) is located extract flux from said housing (30), said secondary permanent magnet (12) injects flux into said housing (30), and if the primary permanent magnets (10) located in the teeth (23) contiguous to the housing (30) in which said secondary permanent magnet (12) is located inject flux into said housing (30), said secondary permanent magnet (12) extracts flux from said housing (30).

10. Flux-switching permanent magnet machine according to claim 8 or 9, wherein the transversely arranged secondary permanent magnets (12) are located at one end of the housing (30) away from the base (22).

11. Flux-switching permanent magnet machine according to any of claims 8 to 10, wherein the transversely arranged secondary permanent magnets (12) are supported on the base (22).

12. Flux-switching permanent magnet machine according to any of the preceding claims, wherein the active element (2) comprises at least one additional secondary permanent magnet (13) in each housing (30) arranged between contiguous secondary permanent magnets (11, 12), said additional permanent magnets (13) being magnetized with an intermediate orientation between the magnetization orientations of the secondary permanent magnets (11, 12) between which they are arranged.

13. Flux-switching permanent magnet machine according to claim 12, wherein the active element (2) comprises an array of additional secondary permanent magnets (13) in each housing (30) arranged between contiguous secondary permanent magnets (11, 12), said additional permanent magnets (13) being magnetized with intermediate orientations between the magnetization orientations of the secondary permanent magnets (11, 12) and/or the magnetization orientations of the additional permanent magnets (13) between which they are arranged.

14. Flux-switching permanent magnet machine according to any of the preceding claims, wherein the winding (24) is mounted on a support (25) comprising a hole (26), the tooth (23) being arranged in the hole (26) of a respective support (25).

15. Flux-switching permanent magnet machine according to any of the preceding claims, wherein the active element (2) comprises a peripheral reinforcement magnet (14) fixed between every two primary permanent magnets (10) and supported on the base (22) of the module (20), the peripheral reinforcement magnet (14) being magnetized with an orientation perpendicular to the direction of relative movement, such that if the primary permanent magnets (10) between which the peripheral reinforcement magnet (14) is located extract flux from the housing (30), the peripheral reinforcement magnet (14) extracts flux from said housing (30), and if the primary permanent magnets (10) between which the peripheral reinforcement magnet (14) is located inject flux into the housing (30), the peripheral reinforcement magnet (14) injects flux into said housing (30).

16. Flux-switching permanent magnet machine according to any of the preceding claims, wherein the flux-switching permanent magnet machine (1) is a linear machine.

17. Flux-switching permanent magnet machine according to any of claims 1 to 16, wherein the flux-switching permanent magnet machine (1) is a rotary machine, with the active element (2) being a stator and the passive element (3) being a rotor.
